# EUROPEAN PATENT APPLICATION

(11) **EP 4 535 245 A1**
(43) Date of publication of application: **09.04.2025**
(21) Application number: 23811642.0
(22) Date of filing: 11.05.2023
(51) Int. Cl.: G06N 20/00

(54) **MACHINE LEARNING METHOD, AND MACHINE LEARNING DEVICE**

(30) Priority: 27.05.2022 JP 2022087178
(71) Applicant: EBARA CORPORATION, Ota-ku, Tokyo 144-8510 (JP); University of Fukui, Fukui-shi, Fukui 910-8507 (JP)
(72) Inventor: TAKATOH, Chikako, Tokyo 144-8510 (JP); NAKAMURA, Yumiko, Tokyo 144-8510 (JP); SUGIYAMA, Kazuhiko, Tokyo 144-8510 (JP); HONDA, Tomomi, Fukui-shi, Fukui 910-8507 (JP)
(74) Representative: Klang, Alexander H.
(86) International application number: PCT/JP2023/017757
(87) International publication number: WO 2023/228767

(57) **Abstract**

A machine-learning method includes: a data-set division process of separating a period into a learning period and a validation period, and dividing data set into learning data and validation data; a learning-candidate-period separating process of separating learning candidate period into a plurality of divided learning periods; a learning-period evaluation process of generating a learning-period evaluation model for each divided learning period using learning data corresponding to the divided learning periods, and calculating an evaluation index of the learning-period evaluation model for each divided learning period; a learning-period selection process of repeatedly performing the learning-candidate-period separating process and the learning-period evaluation process until a predetermined termination condition is satisfied, and selecting a divided learning period having a high evaluation index as a learning target period when the termination condition is satisfied; and a model output process of outputting the learning model on which machine learning has been performed using the learning data corresponding to the learning target period.

## Description

### Technical Field

The present invention relates to a machine-learning method and a machine-learning apparatus.

### Background Art

Conventionally, when machine learning is performed on a data set, a method called cross-validation has been used. The cross-validation includes dividing a data set into learning data and validation data, performing machine learning of a learning model using the learning data, and evaluating a performance of the learning model on which the machine learning has been performed using the validation data (for example, see Patent Document 1 and Patent Document 2).

### Citation List

### Patent Literature

Patent document 1: Japanese laid-open patent publication No. 2019-003408
Patent document 2: Japanese laid-open patent publication No. 2019-061565

### Summary of Invention

### Technical Problem

If the learning data for the machine learning in the cross-validation contains, for example, idiosyncratic data whose characteristics are significantly different from other data, the performance of the learning model may be degraded due to an influence of the idiosyncratic data.

The present invention has been made in view of the above-described problem. It is therefore an object of the present invention to provide a machine-learning method and a machine-learning apparatus capable of improving a performance of a learning model on which the machine learning has been performed.

### Solution to Problem

In order to achieve the above object, a machine-learning method according to one aspect of the present invention comprises:
performing machine learning of a learning model by a computer using a data set containing time-series data obtained at respective points in time according to a change in a predetermined phenomenon over time in a predetermined period,
wherein performing the machine learning of the learning model comprises:
   a data-set division process of separating the period into a learning period and a validation period, setting the learning period to an initial learning candidate period, and dividing the data set into learning data corresponding to the learning period and validation data corresponding to the validation period;
   a learning-candidate-period separating process of separating the learning candidate period into a plurality of divided learning periods;
   a learning-period evaluation process of generating a learning-period evaluation model for each of the plurality of divided learning periods by performing machine learning of the learning model for each of the plurality of divided learning periods using the learning data corresponding to each of the plurality of divided learning periods, and calculating an evaluation index of the learning-period evaluation model for each of the plurality of divided learning periods by performing verification of the learning-period evaluation model for each of the plurality of divided learning periods using the validation data;
   a learning-period selection process of repeating the learning-candidate-period separating process and the learning-period evaluation process while setting a divided learning period having a high evaluation index to a next learning candidate period until a predetermined termination condition is satisfied, and selecting the divided learning period having the high evaluation index as a learning target period when the termination condition is satisfied; and
   a model output process of outputting, as a learned model, the learning model on which machine learning has been performed using the learning data corresponding to the learning target period.

Furthermore, a machine-learning method according to another aspect of the present invention comprises:
performing machine learning of a learning model by a computer using a data set containing time-series data obtained at respective points in time according to a change in a predetermined phenomenon over time in a predetermined period,
wherein performing the machine learning of the learning model comprises:
   a data-set division process of separating the period into a learning period and a validation period, setting the learning period to an initial learning candidate period, and dividing the data set into learning data corresponding to the learning period and validation data corresponding to the validation period;
   a learning-data division process of separating the learning period into a plurality of sub-learning periods, and dividing the learning data into a plurality set of sub-learning data corresponding to the plurality of sub-learning periods;
   a learning-candidate-period separating process of separating the plurality of sub-learning periods included in the learning candidate period into a plurality of divided learning periods;
   a learning-period evaluation process of generating a learning-period evaluation model for each of the plurality of divided learning periods by performing machine learning of the learning model for each of the plurality of divided learning periods using the plurality set of sub-learning data corresponding to the plurality of sub-divided learning periods included in each of the plurality of divided learning periods, and calculating an evaluation index of the learning-period evaluation model for each of the plurality of divided learning periods by performing verification of the learning-period evaluation model for each of the plurality of divided learning periods using the validation data;
   a learning-period selection process of repeating the learning-candidate-period separating process and the learning-period evaluation process while setting a divided learning period having a high evaluation index to a next learning candidate period until a predetermined termination condition is satisfied, and selecting a sub-learning period included in the divided learning period having the high evaluation index as a learning target period when the termination condition is satisfied; and
   a model output process of outputting, as a learned model, the learning model on which machine learning has been performed using sub-learning data corresponding to the learning target period.

### Advantageous Effects of Invention

According to the machine-learning method of the embodiments of the present invention, in the learning-period selection process, the learning-candidate-period separating process and the learning-period evaluation process are repeatedly performed, so that the divided learning period having the high evaluation index for the learning-period evaluation model is selected as the learning target period, and the machine learning of the learning model is performed using the learning data corresponding to the learning target period. Therefore, a performance of the learning model on which the machine learning has been performed can be improved.

Problems, configurations, and effects other than the previous descriptions will be clarified in the descriptions of embodiments, which will be described later.

### Brief Description of Drawings

[FIG. 1] FIG. 1 is a configuration diagram showing an example of a machine-learning apparatus 1;
[FIG. 2] FIG. 2 is a hardware configuration diagram showing an example of a computer 200;
[FIG. 3] FIG. 3 is a flowchart showing an example of a machine-learning method S1 according to a first embodiment;
[FIG. 4] FIG. 4 is a flowchart (continuation of FIG. 3) showing the example of the machine-learning method S1 according to the first embodiment;
[FIG. 5] FIG. 5 is a diagram showing an example of operation of the machine-learning method S1 according to the first embodiment;
[FIG. 6] FIG. 6 is a diagram (continuation of FIG. 5) showing the example of operation of the machine-learning method S1 according to the first embodiment;
[FIG. 7] FIG. 7 is a diagram showing an example of calculation of evaluation indexes in the machine-learning method S1 according to the first embodiment;
[FIG. 8] FIG. 8 is a flowchart showing an example of a machine-learning method S2 according to a second embodiment;
[FIG. 9] FIG. 9 is a flowchart (continuation of FIG. 8) showing the example of the machine-learning method S2 according to the second embodiment;
[FIG. 10] FIG. 10 is a diagram showing an example of operation of the machine-learning method S2 according to the second embodiment;
[FIG. 11] FIG. 11 is a diagram (continuation of FIG. 10) showing the example of operation of the machine-learning method S2 according to the second embodiment; and
[FIG. 12] FIG. 12 is a diagram showing an example of calculation of evaluation indexes in the machine-learning method S2 according to the second embodiment.

### Description of Embodiments

Embodiments of the present invention will now be described with reference to the drawings. In the following descriptions, scope necessary for the descriptions to achieve the object of the present invention will be schematically shown, scope necessary for the descriptions of relevant parts of the present invention will be mainly described, and parts omitted from the descriptions will be based on known technology.

### (First embodiment)

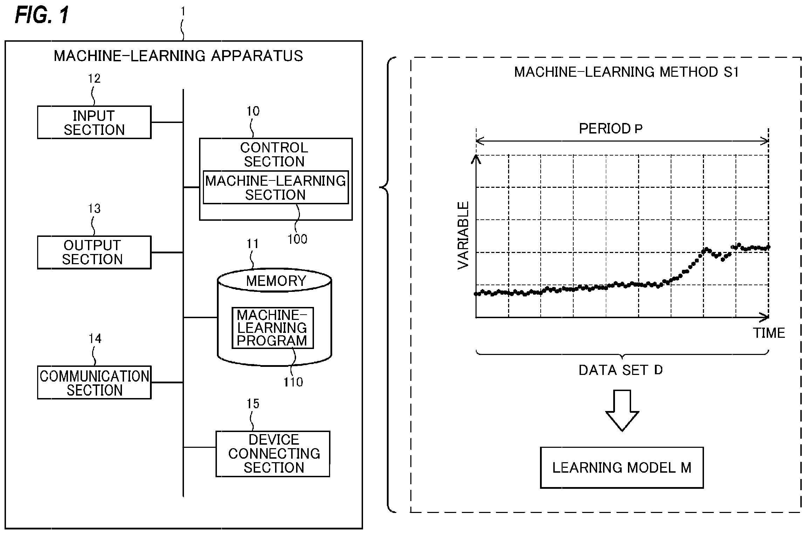

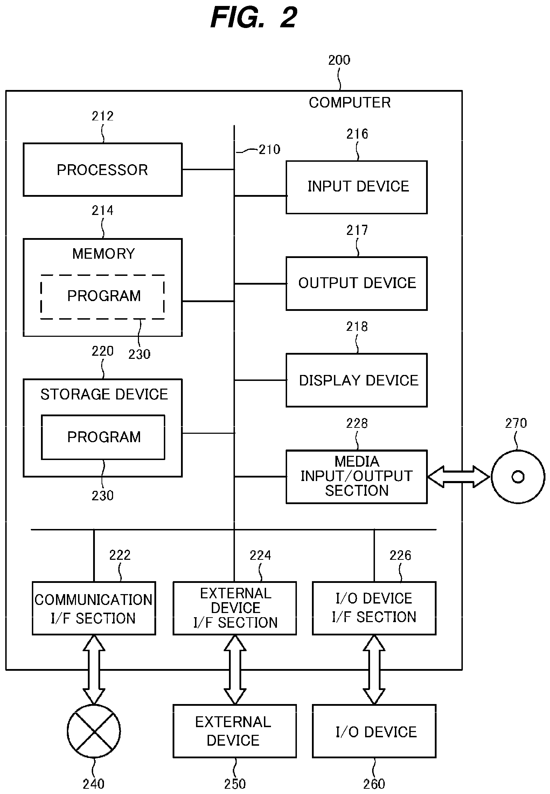

FIG. 1 is a configuration diagram showing an example of a machine-learning apparatus 1 according to a first embodiment. The machine-learning apparatus 1 is configured to perform a machine-learning method S1 of performing machine learning of a learning model M using a data set D. The machine-learning apparatus 1 is configured by, for example, a general-purpose or dedicated computer (see FIG. 2 described later).

The data set D includes time-series data obtained at respective points in time according to a change in predetermined phenomenon over time in a predetermined period P. The time-series data contains data points arranged in a time-series order. The predetermined phenomenon is, for example, a phenomenon in which one or more variable(s) representing a state of an observation target changes over time. Examples of the phenomenon include a mechanical phenomenon, an electromagnetic phenomenon, a thermal phenomenon, an acoustic phenomenon, a chemical phenomenon, a physiological phenomenon, etc. The phenomenon may be a natural phenomenon or an economic phenomenon. The variable(s) that represents the state of the observation target in each phenomenon is measured by, for example, a sensor at a predetermined time cycle. The measured variables are quantified (digitized) as data, and are collected and accumulated in time-series order, so that the data set D for use in the machine-learning method S1 is composed. The data set D may be collected in the past or in real time.

Main components of the machine-learning apparatus 1 include a control section 10, a memory 11, an input section 12, an output section 13, a communication section 14, and a device connecting section 15.

The control section 10 performs a machine-learning program 110 stored in the memory 11 to thereby function as a machine-learning section 100 configured to perform various processes in the machine-learning method S1. The memory 11 stores the machine-learning program 110 and various data used in the machine-learning program 110, and further stores, for example, an operating system (OS), other programs, data, etc. The input section 12 receives various input operations, and the output section 13 outputs various information via a display screen or voice, so that the input section 12 and the output section 13 function as user interfaces. The communication section 14 is coupled to a wired or wireless network and functions as a communication interface configured to transmit and receive various data to and from another device (not shown). The device connecting section 15 functions as a connecting interface with an external device, such as a scanner, a printer, etc., a measuring device, such as a sensor, etc., and a storage medium, such as a USB memory, a CD-ROM, a DVD, etc.

In the machine-learning method S1, a learned model is provided to an arbitrary utilization system by performing the machine learning of the learning model M using the data set D. When the data set D is based on, for example, variable(s) of a monitoring target or a controlling target in an apparatus or a facility (which may be one of components of the apparatus or the facility), the learned model is used to estimate a state (abnormality, failure, signs thereof, etc.) of the monitoring target or to control the controlling target by inputting unknown variables (which may be variables collected in the past or in real time) to the learned model.

The learning model M is a model that implements arbitrary machine-learning algorithm or arbitrary machine-learning method. The learning model M may be used for a classification problem, such as a binary classification or a multi-value classification, or may handle a regression problem. Examples of the learning model M include tree type (e.g., decision tree, regression tree), ensemble learning (e.g., bagging, boosting), neural network type (including deep learning) (e.g., deep neural network, recurrent neural network, convolutional neural network, LSTM), clustering type (e.g., hierarchical clustering, non-hierarchical clustering, k-nearest neighbor algorithm, and k-mean clustering), multivariate analysis (e.g., principal component analysis, factor analysis, logistic regression), and support vector machine, while the learning model M is not limited to these examples. In addition, any one of supervised learning, unsupervised learning, and reinforcement learning as a machine-learning method may be applied to the learning model M.

FIG. 2 is a hardware configuration diagram showing an example of a computer 200. The computer 200 is an example of a device constituting the machine-learning apparatus 1, and is configured as a general-purpose or dedicated computer.

As shown in FIG. 2, main components of the computer 200 include buses 210, a processor 212, a memory 214, an input device 216, an output device 217, a display device 218, a storage device 220, a communication I/F (interface) section 222, an external device I/F section 224, an I/O (input/output) device I/F section 226, and a media input/output section 228. The above components may be omitted as appropriate depending on an application in which the computer 200 is used.

The processor 212 includes one or more arithmetic processing unit(s) (CPU (Central Processing Unit), MPU (Micro-processing unit), DSP (digital signal processor), GPU (Graphics Processing Unit), etc.) and operates as a control section 10 configured to control the entire computer 200. The memory 214 stores various data and programs 230, and includes, for example, a volatile memory (DRAM, SRAM, etc.) that functions as a main memory, a non-volatile memory (ROM), a flash memory, etc.

The input device 216 includes, for example, a keyboard, a mouse, a numeric keypad, an electronic pen, etc., and functions as the input section 12. The output device 217 includes, for example, a sound (voice) output device, a vibration device, etc., and functions as the output section 13. The display device 218 includes, for example, a liquid crystal display, an organic EL display, electronic paper, a projector, etc., and functions as the output section 13. The input device 216 and the display device 218 may be configured integrally, such as a touch panel display. The storage device 220 includes, for example, HDD (Hard Disk Drive), SSD (Solid State Drive), etc., and functions as the memory 11. The storage device 220 stores various data necessary for executing the operating system and the programs 230.

The communication I/F section 222 is coupled to a network 240, such as the Internet or an intranet, in a wired manner or a wireless manner, and functions as the communication section 14 that transmits and receives data to and from another computer according to a predetermined communication standard. The external device I/F section 224 is coupled to an external device 250, such as a camera, a printer, a scanner, a reader/writer, in a wired manner or a wireless manner, and functions as the device connecting section 15 that transmits and receives data to and from the external device 250 according to a predetermined communication standard. The I/O device I/F section 226 is coupled to I/O devices 260, such as various sensors or actuators, and functions as the device connecting section 15 that transmits and receives various signals, such as detection signals from the sensors or control signals to the actuators, and data to and from the I/O devices 260. The media input/output section 928 is constituted of, for example, a drive device, such as a DVD (Digital Versatile Disc) drive or a CD (Compact Disc) drive, a memory card slot, and a USB connector, and functions as the device connecting section 15 that writes and reads data into and from a medium (non-transitory storage medium) 970, such as a DVD, a CD, a memory card, or a USB flash drive.

In the computer 200 having the above configurations, the processor 212 calls the program 230 stored in the storage device 220 into the memory 214 and executes the program, and controls each section of the computer 200 via the buses 210. The program 230 may be stored in the memory 214 instead of the storage device 220. The program 230 may be stored in the medium 270 in an installable file format or an executable file format, and may be provided to the computer 200 via the media input/output section 228. The program 230 may be provided to the computer 200 by being downloaded via the network 240 and the communication I/F section 222. In addition, the computer 200 may perform various functions realized by the processor 212 executing the programs 230. The computer 200 may include hardware, such as an FPGA (field-programmable gate array), an ASIC (application specific integrated circuit), etc. for executing the above-described various functions.

The computer 200 is, for example, a stationary computer or a portable computer, and is an electronic device in arbitrary form. The computer 200 may be a client computer, a server computer, or a cloud computer.

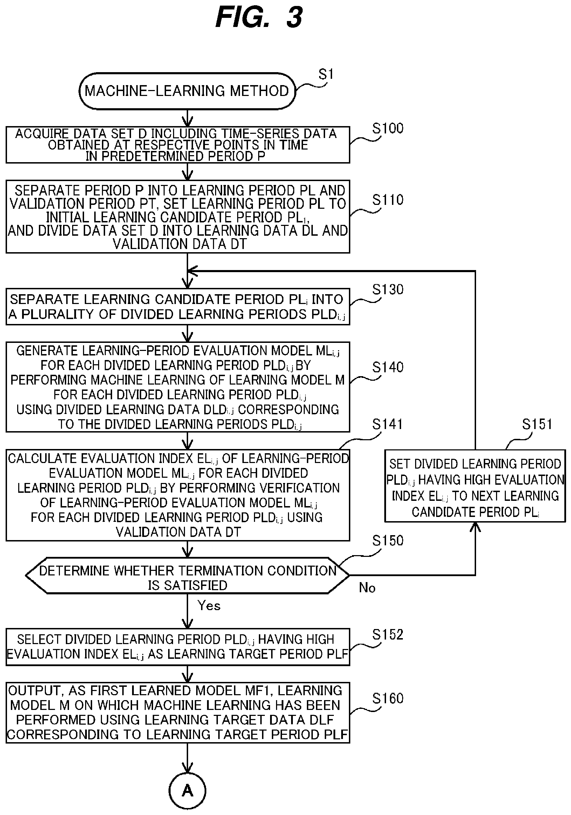

Next, details of the machine-learning method S1 performed by the control section 10 (machine-learning section 100) of the machine-learning apparatus 1 having the above configurations will be described with reference to FIGS. 3 to 7.

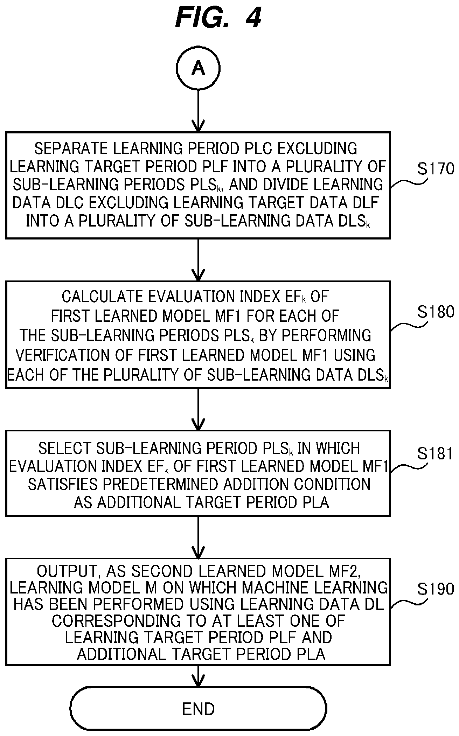

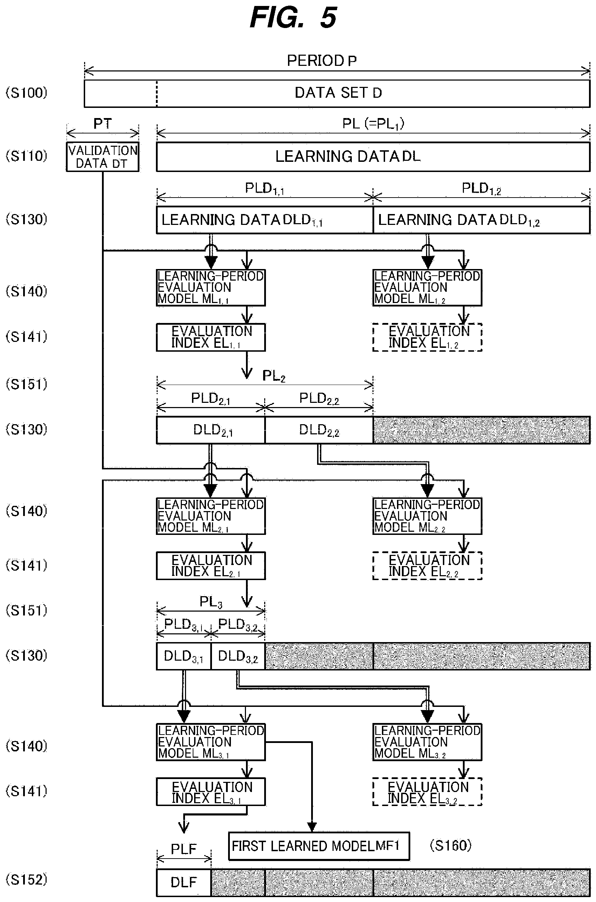

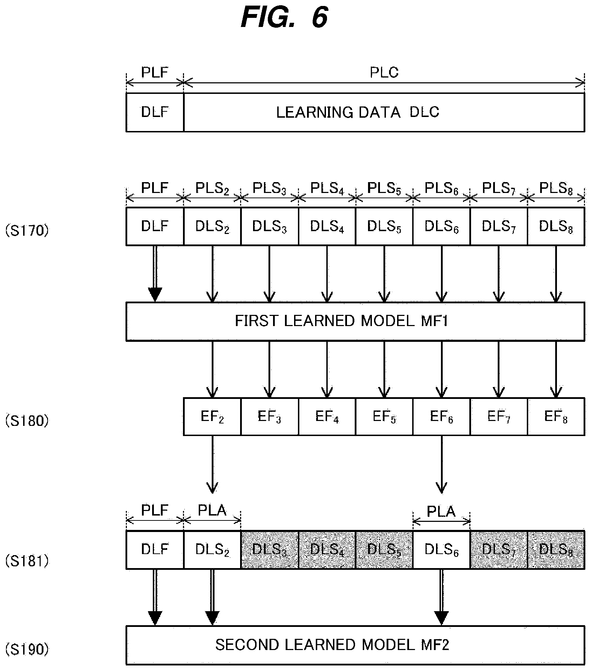

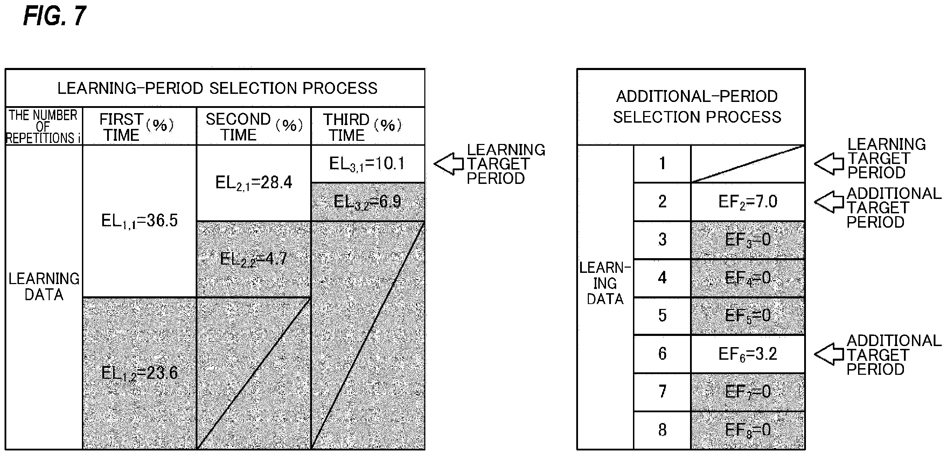

FIGS. 3 and 4 are flowcharts showing an example of the machine-learning method S1 according to the first embodiment. FIGS. 5 and 6 are diagrams showing an example of operation of the machine-learning method S1 according to the first embodiment. FIG. 7 is a diagram showing an example of calculation of evaluation indexes in the machine-learning method S1 according to the first embodiment.

First, in step S100 (data-set acquisition process), the machine-learning apparatus 1 acquires a data set D including time-series data obtained at respective points in time in a predetermined period P. The time-series data contains data points arranged in a time-series order. The data set D may be read out from the memory 11, may be received from another device via the communication section 14, may refer to data stored in the storage medium via the device connecting section 15, or may be data measured by the measuring device via the device connecting section 15.

Next, in step S110 (data-set division process), the period P is separated into a learning period PL and a validation period PT. The learning period PL is set to an initial learning candidate period PL₁, and the data set D is divided into learning data DL corresponding to the learning period PL and validation data DT corresponding to the validation period PT.

The period P is separated into the learning period PL (e.g., 90%) and the validation period PT (e.g., 10%) with a predetermined data ratio, e.g., "9:1". The validation period PT may be set discretely in a time-series order of the period P. For example, if the period P is 35 days, it is preferable that the validation period PT is dispersed in the time-series order of the period P, such as one day in an early period (1st to 12th days), one day in a middle period (13th to 24th days), and one day in a late period (25th to 35th days). The validation period PT may be set to 6th day, 18th day, and 30th day. As a result, a bias in the data included in the validation data can be suppressed.

The initial learning candidate period PL₁ indicates an initial value of a learning candidate period PLᵢ (where i = 1, 2, ..., R (R is an integer equal to or larger than 2)) when a learning-candidate-period separating process S130 and a learning-period evaluation process S140 and S141 are repeatedly performed in a learning-period selection process S150 to S152 which will be described later. The "i" is a variable (index) indicating the number of repetitions, and is initialized as the number of repetitions i = 1 in the data-set division process S110. The "R" indicates an upper limit value of the number of repetitions. In this embodiment, a case where the upper limit value of repetitions R = 3 will be described.

Next, in step S130 (learning-candidate-period separating process), the learning candidate period PLᵢ is separated into a plurality of divided learning periods PLD_{i, j} (where j = 1, 2, ..., S (S is an integer equal to or larger than 2)). The "j" is a variable (index) indicating an identifier for identifying the plurality of divided learning periods PLDᵢ,ⱼ. The "S" indicates the number of segments when the learning candidate period PLᵢ is separated into the plurality of divided learning periods PLD_{i, j}. In this embodiment, a case where the number of segments S = 2 will be described. Therefore, in this embodiment, the initial learning candidate period PL₁ when the number of repetitions i is "1" is separated into two divided learning periods PLD₁, ₁ and PLD₁, ₂ corresponding to the number of segments S being "2".

The learning candidate period PLᵢ may be separated into the plurality of divided learning periods PLD_{i, j} such that each of the divided learning periods PLD_{i, j} includes discrete periods in a time-series order of the learning candidate period PLᵢ. For example, if the learning candidate period PL₁ is 32 days out of 35 days, excluding 6th, 18th, and 30th days, a divided learning period PLD₁, ₁ is 16 days including 1st to 5th and 19th to 29th days, and a divided learning period PLD₁, ₂ is 16 days including 7th to 17th and 31st to 35th days. As a result, a bias in the data included in each of the divided learning periods PLDᵢ,ⱼ can be suppressed.

Next, in steps S140 and S141 (learning-period evaluation process), a learning-period evaluation model ML_{i, j} is generated for each of the divided learning periods PLD_{i, j} by performing machine learning of the learning model M for each of the divided learning periods PLD_{i, j} using divided learning data DLD_{i, j}, which is the learning data DL corresponding to each of the divided learning periods PLDᵢ,ⱼ. An evaluation index ELᵢ,ⱼ of the learning-period evaluation model MLᵢ,ⱼ is then calculated for each of the divided learning periods PLD_{i, j} by performing verification of the learning-period evaluation model ML_{i, j} for each of the divided learning periods PLD_{i, j} using the validation data DT.

The evaluation index EL_{i, j} of the learning-period evaluation model MLᵢ,ⱼ is, for example, an accuracy rate, a precision rate, a recall rate, a specificity rate, an F value, etc. A single evaluation index may be used, or a combination of evaluation indexes may be used. In this embodiment, a case in which the precision rate is used as the evaluation index EL_{i, j} will be described. When the number of repetitions i is "1", a precision rate (evaluation index EL_{1, 1} = 36.5%) of a learning-period evaluation model ML_{1, 1} on which machine learning has been performed using the divided learning period PLD_{1, 1} and a precision rate (evaluation index EL_{1, 2} = 23.6%) of a learning-period evaluation model ML_{1, 2} on which machine learning has been performed using the divided learning period PLD_{1, 2} are calculated.

Next, in steps S150 to S152 (learning-period selection process), whether to terminate the repetitive process of repeating the learning-candidate-period separating process S130 and the learning-period evaluation process S140, S141 is determined according to a predetermined termination condition (step S150). The termination condition for the determination may be such that whether the number of repetitions i exceeds the upper limit value of repetitions R (in this embodiment, R = 3) when the number of repetitions i is incremented, or whether the evaluation index EL_{i, j} falls outside a predetermined limit value (e.g., a lower limit value), etc.

When the termination condition is not satisfied (the step S151: No), in order to continue the repetitive process, divided learning period(s) PLDᵢ,ⱼ having high evaluation index(es) EL_{i, j} is set to a next learning candidate period PLᵢ (the step S151). The process then returns to the step S130 to thereby repeatedly perform the above-described learning-candidate-period separating process S130 and the learning-period evaluation process S140, S141 until the termination condition is satisfied. For example, in this embodiment, when the number of repetitions i is "1", the divided learning period PLD₁, ₁ having a high evaluation index EL_{1, 1} is set to a next learning candidate period PL₂. When the number of segments S is "2", one of the divided learning periods PLD_{i, j} having a higher evaluation index EL_{i, j} is set to the next learning candidate period PLᵢ, while when the number of segments S is "3 or more", one of the divided learning periods PLD_{i, j} having the highest evaluation index EL_{i, j} may be set to the next learning candidate period PLᵢ, or divided learning periods PLD_{i, j} arranged in descending order of the evaluation indexes EL_{i, j} may be set to the next learning candidate period PLᵢ.

On the other hand, when the termination condition is satisfied (the step S151: Yes), the repetitive process is terminated, and divided learning period(s) PLD_{i, j} having high evaluation index(es) EL_{i, j} is selected as a learning target period PLF (step S152). When the number of segments S is "2", one divided learning period PLD_{i, j} having a higher evaluation index EL_{i, j} is set to the learning target period PLF, while when the number of segments S is "3 or more", one divided learning period PLD_{i, j} having the highest evaluation index EL_{i, j} may be set to the learning target period PLF, or divided learning periods PLD_{i, j} arranged in descending order of the evaluation indexes EL_{i, j} may be set to the learning target period PLF.

In step S160 (first model output process), the learning model M on which machine learning has been performed using the learning data DL (hereinafter referred to as "learning target data DLF") corresponding to the learning target period PLF is then output as a first learned model MF1. The first learned model MF1 may be output to the memory 11 or other device. The first learned model MF1 includes, for example, learned coefficients or parameters for characterizing the learning model M. When a second learned model MF1 is output in a second model output process S190 described later, outputting of the first learned model MF1 may be omitted.

Next, in step S170 (learning-data division process), a learning period PLC excluding the learning target period PLF is separated into a plurality of sub-learning periods PLSₖ (k = 2, 3, ..., T (T is an integer equal to or larger than 3)), and learning data DLC excluding the learning target data DLF corresponding to the learning target period PLF is divided into a plurality set of sub-learning data DLSₖ corresponding to the plurality of sub-learning periods PLSₖ. The "T" indicates the number of divisions when the learning data DLC is divided into the plurality set of sub-learning data DLSₖ. In this embodiment, a case where the number of divisions T = 7 (= 2^{R}-1 = 2³-1) and seven sub-learning data DLSₖ (k = 2, 3, ..., 8) will be described.

Next, in steps S180 and S181 (additional-period selection process), an evaluation index EFₖ of the first learned model MF1 is calculated for each of the plurality of sub-learning periods PLSₖ by performing verification of the first learned model MF1 using each of the plurality set of sub-learning data DLSₖ. Sub-learning period(s) PLSₖ in which the evaluation index(es) EFₖ of the first learned model MF1 satisfies a predetermined addition condition is then selected as additional target period(s) PLA. The addition condition for the determination may be such that whether the evaluation index EFₖ exceeds a threshold value. As a result, one sub-learning period PLSₖ may be selected as the additional target period PLA, or a plurality of sub-learning periods PLSₖ may be selected as the additional target periods PLA. In the example of FIGS. 6 and 7, a case in which two sub-learning periods PLS₂ and PLS₆ are selected as the additional target periods PLA is illustrated.

In step S190 (second model output process), the learning model M on which machine learning has been performed using the learning data DL corresponding to at least one of the learning target period PLF and the additional target period(s) PLA is then output as a second learned model MF2. In other words, machine learning of the learning model M is performed using at least one of the learning target data DLF corresponding to the learning target period PLF and sub-learning data DLSₖ (in the example of FIG. 6 and FIG. 7, DLS₂ and DLS₆) corresponding to the additional target period(s) PLA. The learning model M is output as the second learned model MF2, and a series of processes is terminated. As in the first learned model MF1, the second learned model MF2 may be output to the memory 11 or other device. As in the first learned model MF1, the second learned model MF2 includes, for example, learned coefficients or parameters for characterizing the learning model M.

The second learned model MF2 may additionally perform machine learning (relearning) of the first learned model MF1 using the sub-learning data DLSₖ corresponding to the additional target period(s) PLA, or may perform machine learning of an initialized learning model M using the learning target data DLF and the sub-learning data DLSₖ corresponding to the additional target period(s) PLA. A plurality of second learned models MF2 may be output as the second learned model MF2 by performing machine learning of the learning model M using any combination of the learning target data DLF and the sub-learning data DLSₖ. For example, a learning model M on which machine learning has been performed using the learning target data DLF and the sub-learning data DLS₂, DLS₆, a learning model M on which machine learning has been performed using the learning target data DLF and the sub-learning data DLS₂, and a learning model M on which machine learning has been performed using the learning target data DLF and the sub-learning data DLS₆ may be output.

As described above, according to the machine-learning method S1 of this embodiment, the learning-candidate-period separating process S130 and the learning-period evaluation process S140, S141 are repeatedly performed in the learning-period selection process S150 to S152, so that the divided learning period PLD_{i, j} having the high evaluation index EL_{i, j} of the learning-period evaluation model ML_{i, j} is selected as the learning target period PLF, and machine learning of the learning model M is performed using the learning target data DLF corresponding to the learning target period PLF. Therefore, a performance of the learning model on which the machine learning has been performed can be improved.

Furthermore, in the additional-period selection process S180 and S181, the sub-learning period(s) PLSₖ in which the evaluation index(es) EFₖ of the first learned model MF1 satisfies the predetermined addition condition is selected as the additional target period(s) PLA, and machine learning of the learning model M is performed using the sub-learning data DLSₖ corresponding to the additional target period(s) PLA. Therefore, the performance of the learning model can be improved while overlearning caused by performing machine learning using the learning target data DLF is suppressed by using the sub-learning data DLSₖ.

### (Second embodiment)

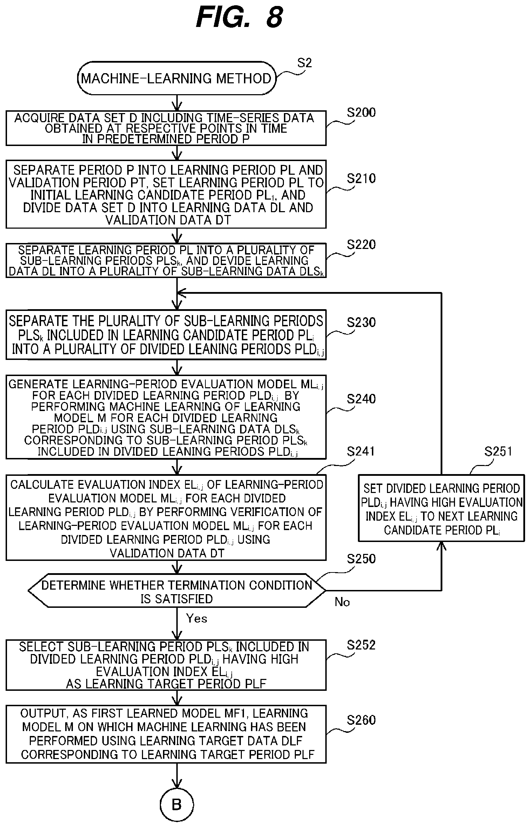

Basic configurations of the machine-learning apparatus 1 according to this embodiment are the same as those of the first embodiment, while details of a machine-learning method S2 performed by the control section 10 (machine-learning section 100) of the machine-learning apparatus 1 differ from the machine-learning method S1 in the first embodiment. Specifically, in the first embodiment, the learning-data division process S170 is performed after the first model output process S160, whereas in the second embodiment, a learning-data division process S220 is performed after a data-set division process S210. The details of the machine-learning method S2 performed by the control section 10 (machine-learning section 100) of the machine-learning apparatus 1 according to this embodiment will be described below with reference to FIGS. 8 to 12.

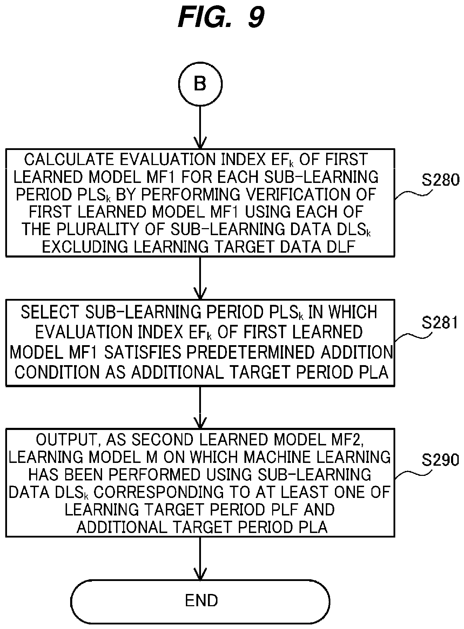

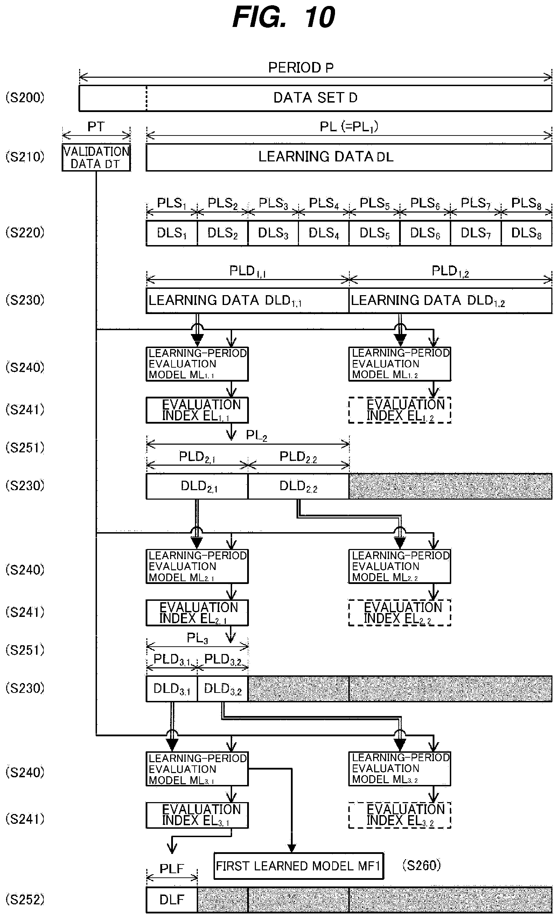

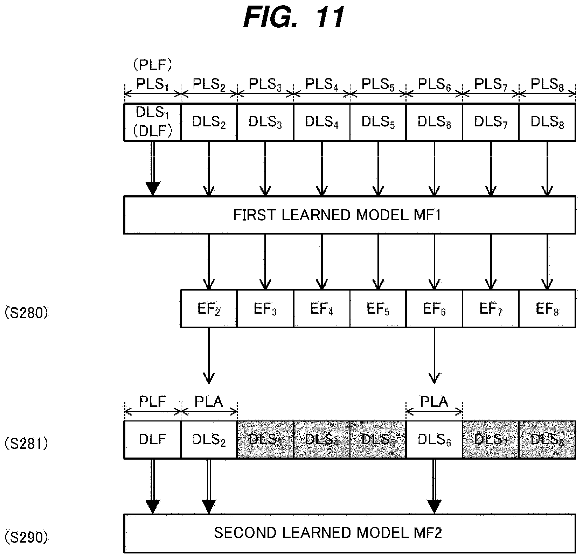

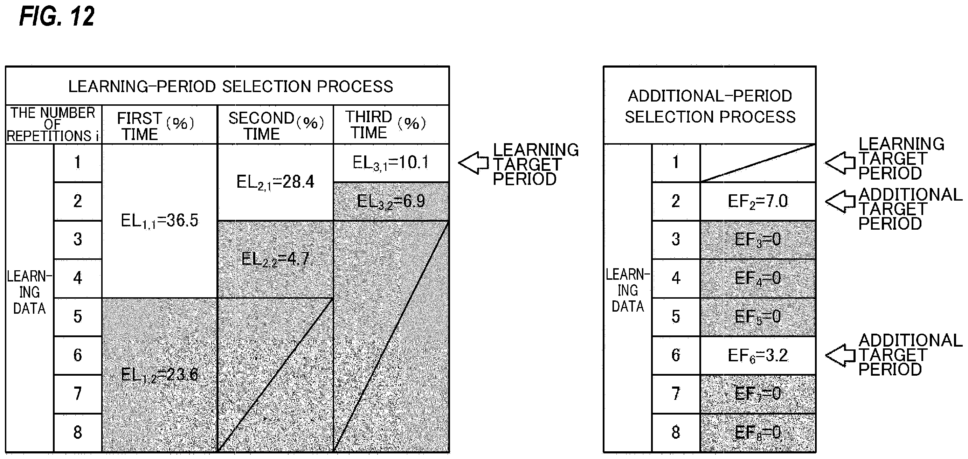

FIGS. 8 and 9 are flowcharts showing an example of the machine-learning method S2 according to the second embodiment. FIGS. 10 and 11 are diagrams showing an example of operation of the machine-learning method S2 according to the second embodiment. FIG. 12 is a diagram showing an example of calculation of evaluation indexes in the machine-learning method S2 according to the second embodiment.

First, in step S200 (data-set acquisition process), the machine-learning apparatus 1 acquires a data set D including time-series data obtained at respective points in time in a predetermined period P, as well as the step S100. The time-series data contains data points arranged in a time-series order.

Next, in step S210 (data-set division process), the period P is separated into a learning period PL and a validation period PT, as well as the step S110. The learning period PL is set to an initial learning candidate period PL₁, and the data set D is divided into learning data DL corresponding to the learning period PL and validation data DT corresponding to the validation period PT.

The initial learning candidate period PL₁ indicates an initial value of a learning candidate period PLᵢ (i = 1, 2, ..., R (R is an integer equal to or larger than 2)) when a learning-candidate-period separating process S230 and a learning-period evaluation process S240, S241 are repeatedly performed in a learning-period selection process S250 to S252 which will be described later. The "i" is a variable (index) indicating the number of repetitions, and is initialized as the number of repetitions i = 1 in the data-set division process S210. The "R" indicates an upper limit value of the number of repetitions. In this embodiment, a case where the upper limit value of repetitions R = 3 will be described.

Next, in step S220 (learning-data division process), the learning period PL is separated into a plurality of sub-learning periods PLSₖ (k = 1, 2, ..., T (S is an integer equal to or larger than 2)), and the learning data DL is divided into a plurality set of sub-learning data DLSₖ corresponding to the plurality of sub-learning periods PLSₖ. The "T" indicates the number of divisions when the learning data DL is divided into the plurality set of sub-learning data DLSₖ. In this embodiment, a case where the number of divisions T = 8 (= 2^{R} = 2³) and eight sub-learning data DLSₖ (k = 1, 3, ..., 8) will be described.

Next, in step S230 (learning-candidate-period separating process), the plurality of sub-learning periods PLSₖ included in the learning candidate period PLᵢ are separated into a plurality of divided learning periods PLD_{i, j} (where j = 1, 2, ..., S (S is an integer equal to or larger than 2)). The "j" is a variable (index) indicating an identifier for identifying the plurality of divided learning periods PLD_{i, j}. The "S" indicates the number of segments when the plurality of sub-learning periods PLSₖ are separated into the plurality of divided learning periods PLDᵢ,ⱼ. In this embodiment, a case where the number of segments S = 2 will be described. Therefore, in this embodiment, the initial learning candidate period PL₁ when the number of repetitions i is "1" is separated into two divided learning periods PLD₁, ₁ and PLD₁, ₂ corresponding to the number of segments S being "2". In this case, the initial learning candidate period PL₁ is separated into the divided learning period PLD₁, ₁ including four sub-learning periods PLS₁ to PLS₄ and the divided learning period PLD₁, ₂ including four sub-learning periods PLS₅ to PLS₈.

The plurality of sub-learning periods PLSₖ may be separated into the plurality of divided learning periods PLD_{i, j} at random in a time-series order of the plurality of sub-learning periods PLSₖ such that each of the plurality of divided learning periods PLD_{i, j} includes discrete periods in a time-series order of the learning candidate period PLᵢ. For example, the divided learning period PLD₁, ₁ may include four sub-learning periods PLS₁, PLS₃, PLS₃, and PLS₇, and the divided learning period PLD₁, ₂ may include four sub-learning periods PLS₂, PLS₄, PLS₆, and PLS₈. As a result, a bias in the data included in each of the plurality of sub-learning periods PLSₖ can be suppressed.

Next, in steps S240 and S241 (learning-period evaluation process), a learning-period evaluation model ML_{i, j} is generated for each of the divided learning periods PLD_{i, j} by performing machine learning of the learning model M for each of the divided learning periods PLD_{i, j} using the sub-learning data DLSₖ corresponding to the sub-learning periods PLSₖ included in each of the divided learning periods PLD_{i, j}. An evaluation index EL_{i, j} of the learning-period evaluation model MLᵢ,ⱼ is then calculated for each of the divided learning periods PLD_{i, j} by performing verification of the learning-period evaluation model ML_{i, j} for each of the divided learning periods PLD_{i, j} using the validation data DT.

Next, in steps S250 to S252 (learning-period selection process), whether to terminate the repetitive process of repeating the learning-candidate-period separating process S230 and the learning-period evaluation process S240, S241 is determined according to a predetermined termination condition (step S250), as well as the steps S150 to S152. The termination condition for the determination may be such that whether the number of repetitions i exceeds the upper limit value of repetitions R (in this embodiment, R = 3) when the number of repetitions i is incremented, or whether the evaluation index EL_{i, j} falls outside a predetermined limit value (e.g., a lower limit value), etc.

When the termination condition is not satisfied (the step S251: No), in order to continue the repetitive process, divided learning period(s) PLDᵢ,ⱼ having a high evaluation index EL_{i, j} is set to a next learning candidate period PLᵢ (the step S251). The process then returns to the step S230 to thereby repeatedly perform the above-described learning-candidate-period separating process S230 and the learning-period evaluation process S240, S241 until the termination condition is satisfied.

On the other hand, when the termination condition is satisfied (the step S251: Yes), the repetitive process is terminated, and a sub-learning period PLSₖ included in a divided learning period PLD_{i, j} having a high evaluation index EL_{i, j} is selected as a learning target period PLF (step S252).

In step S260 (first model output process), the learning model M on which machine learning has been performed using the sub-learning data DLSₖ (hereinafter referred to as "learning target data DLF") corresponding to the learning target period PLF is then output as a first learned model MF1, as well as the step S160.

Next, in steps S280 and S281 (additional-period selection process), an evaluation index EFₖ of the first learned model MF1 is calculated for each of the plurality of sub-learning periods PLSₖ by performing verification of the first learned model MF1 using each of the plurality set of sub-learning data DLSₖ excluding the learning target data DLF corresponding to the learning target period PLF. Sub-learning period(s) PLSₖ in which the evaluation index(es) EFₖ of the first learned model MF1 satisfies a predetermined addition condition is then selected as additional target period(s) PLA. In the example of FIGS. 11 and 12, a case in which two sub-learning periods PLS₂ and PLS₆ are selected as the additional target periods PLA is illustrated.

In step S290 (second model output process), the learning model M on which machine learning has been performed using the sub-learning data DLSₖ corresponding to at least one of the learning target period PLF and the additional target period(s) PLA is then output as a second learned model MF2. In other words, machine learning is performed on the learning model M using at least one of the learning target data DLF corresponding to the learning target period PLF and sub-learning data DLSₖ (DLS₂ and DLS₆ in the example of FIG. 11 and FIG. 12) corresponding to the additional target period(s) PLA. The learning model M is output as the second learned model MF2, and a series of processes is terminated.

As described above, according to the machine-learning method S2 of this embodiment, the learning-candidate-period separating process S230 and the learning-period evaluation process S240, S241 are repeatedly performed in the learning-period selection process S250 to S252, so that the sub-learning data DLSₖ included in the divided learning period PLD_{i, j} having the high evaluation index EL_{i, j} of the learning-period evaluation model MLᵢ,ⱼ is selected as the learning target period PLF. Machine learning is performed on the learning model M using the learning target data DLF corresponding to the learning target period PLF. Therefore, a performance of the learning model on which the machine learning has been performed can be improved.

Furthermore, in the additional-period selection process S280 and S281, the sub-learning period(s) PLSₖ in which the evaluation index(es) EFₖ of the first learned model MF1 satisfies the predetermined additional condition is selected as the additional target period(s) PLA. Machine learning is performed on the learning model M using the sub-learning data DLSₖ corresponding to the additional target period(s) PLA. Therefore, the performance of the learning model can be improved while overlearning caused by performing machine learning using the learning target data DLF is suppressed by using the sub-learning data DLSₖ.

### (Other embodiments)

The present invention is not limited to the above-described embodiments, and various modifications can be made and used without deviating from the scope of the present invention. All of them are included in the technical concept of the present invention.

In embodiments described above, the machine-learning methods S1 and S2 performed by the control section 10 (machine-learning section 100) of the machine-learning apparatus 1 are implemented by a single device, while processes included in the machine-learning methods S1 and S2 may be individually implemented by a plurality of devices.

In the above embodiments, the operation order of each step may be appropriately changed or some steps may be omitted in the flowcharts showing the details of the machine-learning methods S1 and S2. For example, in the machine-learning method S1, the processes of the step S170 and the following steps may be omitted, or in the machine-learning method S2, the processes of the step S280 and the following steps may be omitted.

In the embodiments described above, the machine-learning methods S1 and S2 are performed according to various conditions and settings, such as the termination condition, the addition condition, the data ratio, the upper limit value of repetitions R, the number of segments S, and the number of divisions T. These conditions and settings may be changed as appropriate. For example, the conditions and the settings may be changeable on a display screen by the input section 12 and the output section 13 that function as a user interface.

In the above embodiments, the data-set division processes S110 and S210 in the machine-learning methods S1 and S2 include dividing the data set D into the learning data DL and the validation data DT which adopts a so-called hold-out validation technique. The machine-learning methods S1 and S2 may adopt a combination of cross-validation techniques, such as k-fold cross-validation, stratified k-fold cross-validation, shuffled-fold cross-validation, time-series-fold cross-validation, sliding-type cross-validation, etc., as appropriate.

### Industrial Applicability

The present invention is applicable to a machine-learning method and a machine-learning apparatus.

### Reference Signs List

1...machine-learning apparatus, 10...control section, 11...memory,
12...input section, 13...output section,
14...communication section, 15...device connecting section,
100...machine-learning section, 110...machine-learning program, 200...computer

## Claims

1. A machine-learning method comprising:
performing machine learning of a learning model by a computer using a data set containing time-series data obtained at respective points in time according to a change in a predetermined phenomenon over time in a predetermined period,
wherein performing the machine learning of the learning model comprises:
a data-set division process of separating the period into a learning period and a validation period, setting the learning period to an initial learning candidate period, and dividing the data set into learning data corresponding to the learning period and validation data corresponding to the validation period;
a learning-candidate-period separating process of separating the learning candidate period into a plurality of divided learning periods;
a learning-period evaluation process of generating a learning-period evaluation model for each of the plurality of divided learning periods by performing machine learning of the learning model for each of the plurality of divided learning periods using the learning data corresponding to each of the plurality of divided learning periods, and calculating an evaluation index of the learning-period evaluation model for each of the plurality of divided learning periods by performing verification of the learning-period evaluation model for each of the plurality of divided learning periods using the validation data;
a learning-period selection process of repeating the learning-candidate-period separating process and the learning-period evaluation process while setting a divided learning period having a high evaluation index to a next learning candidate period until a predetermined termination condition is satisfied, and selecting the divided learning period having the high evaluation index as a learning target period when the termination condition is satisfied; and
a model output process of outputting, as a learned model, the learning model on which machine learning has been performed using the learning data corresponding to the learning target period.

2. A machine-learning method comprising:
performing machine learning of a learning model by a computer using a data set containing time-series data obtained at respective points in time according to a change in a predetermined phenomenon over time in a predetermined period,
wherein performing the machine learning of the learning model comprises:
a data-set division process of separating the period into a learning period and a validation period, setting the learning period to an initial learning candidate period, and dividing the data set into learning data corresponding to the learning period and validation data corresponding to the validation period;
a learning-data division process of separating the learning period into a plurality of sub-learning periods, and dividing the learning data into a plurality set of sub-learning data corresponding to the plurality of sub-learning periods;
a learning-candidate-period separating process of separating the plurality of sub-learning periods included in the learning candidate period into a plurality of divided learning periods;
a learning-period evaluation process of generating a learning-period evaluation model for each of the plurality of divided learning periods by performing machine learning of the learning model for each of the plurality of divided learning periods using the plurality set of sub-learning data corresponding to the plurality of sub-divided learning periods included in each of the plurality of divided learning periods, and calculating an evaluation index of the learning-period evaluation model for each of the plurality of divided learning periods by performing verification of the learning-period evaluation model for each of the plurality of divided learning periods using the validation data;
a learning-period selection process of repeating the learning-candidate-period separating process and the learning-period evaluation process while setting a divided learning period having a high evaluation index to a next learning candidate period until a predetermined termination condition is satisfied, and selecting a sub-learning period included in the divided learning period having the high evaluation index as a learning target period when the termination condition is satisfied; and
a model output process of outputting, as a learned model, the learning model on which machine learning has been performed using sub-learning data corresponding to the learning target period.

3. The machine-learning method according to claim 1, further comprising:
a learning-data division process of separating the learning period excluding the learning target period into a plurality of sub-learning periods, and dividing the learning data excluding the learning data corresponding to the learning target period into a plurality set of sub-learning data corresponding to the plurality of sub-learning periods; and
an additional-period selection process of calculating an evaluation index of the learned model for each of the plurality of sub-learning periods by performing verification of the learned model using each of the plurality set of sub-learning data, and selecting, as an additional target period, a sub-learning period in which the evaluation index of the learned model satisfies a predetermined addition condition;
wherein the model output process comprises outputting, as a learned model, the learning model on which machine learning has been performed using the learning data corresponding to at least one of the learning target period and the additional target period.

4. The machine-learning method according to claim 2, further comprising:
an additional-period selection process of calculating an evaluation index of the learned model for each of the plurality of sub-learning periods by performing verification of the learned model using each of the plurality set of sub-learning data excluding the sub-learning data corresponding to the learning target period, and selecting, as an additional target period, a sub-learning period in which the evaluation index of the learned model satisfies a predetermined addition condition;
wherein the model output process comprises outputting, as a learned model, the learning model on which machine learning has been performed using the sub-learning data corresponding to at least one of the learning target period and the additional target period.

5. The machine-learning method according to claim 1, wherein the learning-candidate-period separating process comprises separating the learning candidate period into the plurality of divided learning periods such that each of the plurality of divided learning periods includes discrete periods in a time-series order of the learning candidate period.

6. The machine-learning method according to claim 2, wherein the learning-candidate-period separating process comprises separating the plurality of sub-learning periods into the plurality of divided learning periods at random in a time-series order of the plurality of sub-learning periods such that each of the plurality of divided learning periods includes discrete periods in a time-series order of the learning candidate period.

7. The machine-learning method according to any one of claims 1 to 6, wherein separating the period into the learning period and the validation period in the data-set division process comprises separating the period into the learning period and the validation period such that the validation period is set discretely in a time-series order of the period.

8. A machine-learning apparatus comprising:
a machine-learning section configured to perform machine learning of a learning model using a data set containing time-series data obtained at respective points in time according to a change in a predetermined phenomenon over time in a predetermined period,
wherein the machine-learning section is configured to perform:
a data-set division process of separating the period into a learning period and a validation period, setting the learning period to an initial learning candidate period, and dividing the data set into learning data corresponding to the learning period and validation data corresponding to the validation period;
a learning-candidate-period separating process of separating the learning candidate period into a plurality of divided learning periods;
a learning-period evaluation process of generating a learning-period evaluation model for each of the plurality of divided learning periods by performing machine learning of the learning model for each of the plurality of divided learning periods using the learning data corresponding to each of the plurality of divided learning periods, and calculating an evaluation index of the learning-period evaluation model for each of the plurality of divided learning periods by performing verification of the learning-period evaluation model for each of the plurality of divided learning periods using the validation data;
a learning-period selection process of repeating the learning-candidate-period separating process and the learning-period evaluation process while setting a divided learning period having a high evaluation index to a next learning candidate period until a predetermined termination condition is satisfied, and selecting the divided learning period having the high evaluation index as a learning target period when the termination condition is satisfied; and
a model output process of outputting, as a learned model, the learning model on which machine learning has been performed using the learning data corresponding to the learning target period.

9. A machine-learning apparatus comprising:
a machine-learning section configured to perform machine learning of a learning model using a data set containing time-series data obtained at respective points in time according to a change in a predetermined phenomenon over time in a predetermined period,
wherein the machine-learning section is configured to perform:
a data-set division process of separating the period into a learning period and a validation period, setting the learning period to an initial learning candidate period, and dividing the data set into learning data corresponding to the learning period and validation data corresponding to the validation period;
a learning-data division process of separating the learning period into a plurality of sub-learning periods, and dividing the learning data into a plurality set of sub-learning data corresponding to the plurality of sub-learning periods;
a learning-candidate-period separating process of separating the plurality of sub-learning periods included in the learning candidate period into a plurality of divided learning periods;
a learning-period evaluation process of generating a learning-period evaluation model for each of the plurality of divided learning periods by performing machine learning of the learning model for each of the plurality of divided learning periods using the plurality set of sub-learning data corresponding to the plurality of sub-divided learning periods included in each of the plurality of divided learning periods, and calculating an evaluation index of the learning-period evaluation model for each of the plurality of divided learning periods by performing verification of the learning-period evaluation model for each of the plurality of divided learning periods using the validation data;
a learning-period selection process of repeating the learning-candidate-period separating process and the learning-period evaluation process while setting a divided learning period having a high evaluation index to a next learning candidate period until a predetermined termination condition is satisfied, and selecting a sub-learning period included in the divided learning period having the high evaluation index as a learning target period when the termination condition is satisfied; and
a model output process of outputting, as a learned model, the learning model on which machine learning has been performed using sub-learning data corresponding to the learning target period.
